# FASCICULE DE BREVET EUROPEEN

(11) **EP 3 207 840 B1**
(45) Date de publication et mention de la délivrance du brevet: **13.04.2022**
(21) Numéro de dépôt: 17155715.0
(22) Date de dépôt: 10.02.2017
(51) Int. Cl.: A47J 37/06

(54) **APPAREIL DE CUISSON A FLUX D'AIR**
KOCHGERÄT MIT LUFTSTROM
AIR-FLOW COOKING APPLIANCE

(30) Priorité: 22.02.2016 FR 1651436
(43) Date de publication de la demande: 23.08.2017
(73) Titulaire: SEB S.A., 69130 Ecully (FR)
(72) Inventeur: Delrue, Olivier, 21260 Selongey (FR); Cornu, Jérémy, 21000 Dijon (FR); Bizard, Jean-Claude, 21121 Fontaine les Dijon (FR)
(74) Mandataire: SEB Développement

(56) Documents cités:
- EP-A2- 1 781 154
- WO-A1-2014/125200
- DE-U1-202005 021 931
- US-A1- 2014 116 268

## Description

La présente invention concerne de manière générale un appareil de cuisson domestique, et en particulier un appareil de cuisson portable ou transportable à flux d'air.

Il est connu dans l'art antérieur des appareils de cuisson par convection ou à flux d'air, tels que ceux présentés dans les documents WO2014195129A1 ou EP1781154. En contrepartie, le système décrit présente notamment l'inconvénient de proposer une structure complexe pour le flux d'air, et finalement peu efficace pour cuire des aliments rapidement.

Il est également connu du document US2014/116268A1 des appareils de cuisson comprenant des ventilateurs à flux transversal. Un ventilateur à flux transversal est silencieux, ce qui améliore le confort d'utilisation. Cependant, de tels appareils de cuisson ne présentent pas un flux d'air suffisamment stable.

Un but de la présente invention est de répondre aux inconvénients des documents de l'art antérieur mentionnés ci-dessus et en particulier, tout d'abord, de proposer un appareil de cuisson simple qui permet toutefois de cuire efficacement des aliments.

Pour cela un premier aspect de l'invention concerne un appareil de cuisson comprenant :
- des moyens de ventilation comprenant un ventilateur à flux transversal agencé pour créer un flux d'air dans un espace de cuisson de l'appareil,
- un panier de cuisson, agencé pour recevoir des aliments à cuire dans l'espace de cuisson et pour permettre au flux d'air de traverser un lit d'aliments à cuire,
- des moyens de chauffage agencés pour chauffer le flux d'air, les moyens de chauffage étant agencés dans le flux d'air en aval des moyens de ventilation, et
le panier de cuisson étant agencé dans le flux d'air en aval des moyens de chauffage,
caractérisé en ce que l'appareil de cuisson comprend une zone d'admission (40) en amont des moyens de ventilation, agencée entre l'espace de cuisson et les moyens de ventilation, et en communication avec les moyens de ventilation par une tuyère d'admission.

L'appareil de cuisson selon la présente mise en oeuvre est simple dans son architecture puisque le flux d'air créé par les moyens de ventilation va directement de ces derniers aux moyens de chauffage et ensuite sur et au travers du lit d'aliments. En d'autres termes, le flux d'air ne rencontre pas d'obstacles entre les moyens de ventilation, les moyens de chauffage et ensuite les aliments à cuire. De plus, cette architecture réduit les pertes thermiques, car le flux d'air, une fois chauffé par les moyens de chauffage va directement sur les aliments à cuire pour traverser le lit d'aliments. Cela améliore l'efficacité. Ainsi, il est possible de réduire la puissance des éléments chauffants tout en conservant des temps de cuisson identiques. Enfin, un ventilateur à flux transversal, autrement appelé ventilateur (ou turbine) tangentiel est silencieux, ce qui améliore le confort d'utilisation.

Enfin, une telle zone d'admission permet un fonctionnement optimal du ventilateur à flux transversal. En effet, même si le lit d'aliments à traverser provoque une perte de charge sensible, la zone d'admission permet de stabiliser le flux d'air et/ou de former un volume tampon, ce qui limite les difficultés d'aspiration du ventilateur à flux transversal.

Avantageusement, les moyens de chauffage sont des moyens de chauffage à effet joule. Un tel chauffage permet de transférer rapidement de la chaleur au flux d'air.

Avantageusement, les moyens de chauffage comprennent un fil chauffant d'un diamètre prédéterminé enroulé autour d'un support plat tel qu'un mica sur une pluralité de tours, et le fil d'un tour est espacé du fil du tour adjacent d'une distance d'au moins 1.5 fois le diamètre du fil. Un fil chauffant présente une faible inertie thermique, ce qui permet de raccourcir encore le temps de cuisson. De plus, l'espace entre les tours ou enroulements permet de garantir une bonne convection avec le flux d'air : les pertes de charges sont faibles, et le fil chauffant est refroidi efficacement, ce qui garantit sa longévité.

Avantageusement, le support plat des moyens de chauffage est agencé de manière sensiblement parallèle à une direction d'écoulement du flux d'air au niveau des moyens de chauffage, et/ou chaque tour de fil chauffant présente deux portions sensiblement rectilignes alignées avec ladite direction d'écoulement du flux d'air. Les pertes de charge sont encore limitées, la ventilation est alors efficace.

Avantageusement, les moyens de ventilation sont agencés sur un côté du panier de cuisson, et/ou les moyens de ventilation sont agencés au dessus de la zone d'admission. L'appareil est alors compact.

Avantageusement, le ventilateur à flux transversal comprend un rotor agencé pour tourner autour d'un axe de rotation, et la zone d'admission présente un espace libre dont une section dans un plan perpendiculaire à l'axe de rotation présente :
- une largeur (b) supérieure ou égale à au moins 1.5 fois, et préférentiellement au moins 2 fois, un diamètre du rotor, éventuellement dans une direction transversale à une direction normale de la tuyère d'admission et/ou
- une hauteur (a) supérieure ou égale à au moins 0.8 fois, et préférentiellement au moins 1 fois, un diamètre du rotor, éventuellement dans une direction parallèle à une direction normale de la tuyère d'admission et/ou
- une paroi externe agencée à l'opposé de l'espace de cuisson par rapport à l'axe de rotation et/ou par rapport à la direction normale de la tuyère d'admission, et agencée à une distance (c) de l'axe de rotation et/ou de la direction normale de la tuyère d'admission, et/ou d'une droite passant par l'axe de rotation et parallèle à ladite paroi externe, d'au moins 0.5 fois, et préférentiellement au moins 0.7 fois, le diamètre du rotor. De telles dimensions de la zone d'admission, ou boîte à air, offrent de bonnes conditions d'aspiration pour le ventilateur à flux transversal, qui pourra alors fonctionner en régime normal et non dégradé, même avec le lit d'aliments à traverser.

Autrement dit, le volume du rotor du ventilateur à flux transversal est V1=ΠhD²/4, alors le volume V2 de la zone d'admission est préférentiellement supérieur ou égal à V1*8/π. On peut écrire V2≥8V1/π, avec D le diamètre du rotor du ventilateur à flux transversal, et h la longueur du ventilateur à flux transversal.

De plus, la tuyère d'admission doit être suffisamment loin des parois de la zone d'admission, au moins 0.7*D.

Avantageusement, l'appareil de cuisson comprend une zone d'échappement en aval des moyens de ventilation, agencée entre l'espace de cuisson et les moyens de ventilation, et les moyens de chauffage sont agencés dans la zone d'échappement, à une distance d'au moins 0.3 fois, et préférentiellement 0.5 fois, un diamètre d'un rotor des moyens de ventilation. Un tel éloignement évite de perturber le fonctionnement du ventilateur à flux transversal.

Avantageusement, les moyens de chauffage sont au moins partiellement en regard des aliments à cuire reçus par le panier de cuisson. Cette mise en oeuvre permet de griller ou dorer la surface des aliments à cuire.

Avantageusement, le panier de cuisson présente un fond en forme de grille. Une telle grille limite les pertes de charge.

Avantageusement, le panier de cuisson est agencé de manière amovible par rapport à l'espace de cuisson, et le panier de cuisson est agencé pour être monté sur l'appareil par un côté de celui-ci.

Avantageusement, l'appareil de cuisson est portable ou transportable. En d'autres termes, l'appareil de cuisson n'est pas un four de cuisson du type four à chaleur tournante ou à convection.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue en coupe verticale d'un appareil de cuisson selon la présente invention ;
- la figure 2 représente une vue de moyens de chauffage de l'appareil de la figure 1.

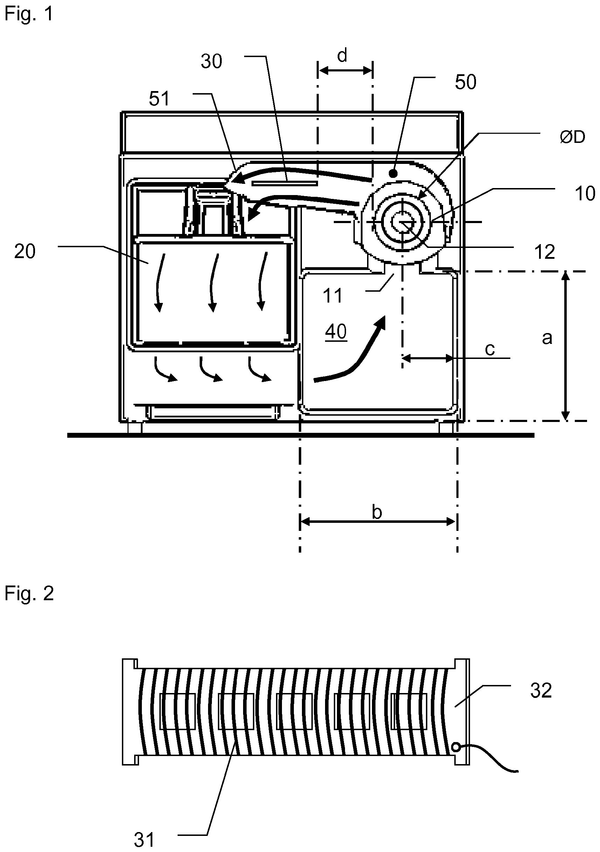

La figure 1 représente une vue d'un appareil de cuisson selon la présente invention en coupe verticale. Sur un côté gauche de la coupe de la figure 1 se trouve un panier de cuisson 20 agencé pour recevoir des aliments à cuire. Sur un côté droit de la coupe se trouvent des moyens de ventilation agencés pour créer un flux d'air, avec un ventilateur à flux transversal 10 qui comprend un rotor agencé pour tourner autour d'un axe de rotation 12 perpendiculaire au plan de la figure 1.

Pour des raisons de clarté, les aliments à cuire ne sont pas représentés dans le panier de cuisson 20, afin de visualiser le flux d'air généré par les moyens de ventilation. Le ventilateur à flux transversal 10 aspire de l'air dans une zone d'admission 40, et le rejette dans une zone d'échappement 50 définie par un capot 51 qui contient aussi des moyens de chauffage 30. Ces derniers chauffent donc le flux d'air qui sort du ventilateur à flux transversal 10, ensuite dirigé vers le panier de cuisson 20 par le capot 51.

Le panier de cuisson 20 comprend un fond troué, typiquement une grille, qui retient les aliments à cuire (des frites par exemple), mais qui laisse passer le flux d'air à travers le lit d'aliment à cuire, et le fond.

Une fois la grille du panier de cuisson 20 passée, le flux d'air est aspiré vers la zone d'admission 40 afin de passer à nouveau à travers le ventilateur à flux transversal 10, à travers une tuyère d'admission 11 (centrée sur l'axe de rotation 12).

Le flux d'air passe donc dans le ventilateur à flux transversal 10, sur les moyens de chauffage 30, à travers les aliments (ou à travers le lit d'aliments) et ensuite retourne à la zone d'admission. En conséquence le flux d'air est chauffé juste après son passage dans le ventilateur à flux transversal 10, et juste avant de passer sur/au travers des aliments à cuire. Cela permet de limiter les pertes de chaleur, car il n'y a pas d'obstacle ou de changement majeur de direction du flux d'air entre les moyens de chauffage 30 et les aliments à cuire. La chaleur est donc transportée sur une courte distance par le flux d'air pour être transférée des moyens de chauffage 30 aux aliments à cuire. Ces derniers sont donc cuits rapidement.

Enfin, on peut remarquer sur la figure 1 que au moins une partie des moyens de chauffage 30 sont en regard des aliments à cuire, ce qui permet d'exposer les aliments à cuire à un rayonnement thermique généré par les moyens de chauffage 30 pour les dorer / griller.

Un ventilateur à flux transversal 10 est très silencieux car il génère peu de pression. Cependant, afin de procurer de bonnes conditions de fonctionnement pour un tel ventilateur à flux transversal 10, l'invention propose de positionner immédiatement en amont de ce dernier une zone d'admission présentant un volume minimal, que l'on peut définir par sa section normale à l'axe de rotation 12. En effet, comme représenté figure 1, la demanderesse s'est aperçue qu'en fixant des conditions sur la hauteur (a), la largeur (b) et la distance (c) en fonction du diamètre du rotor du ventilateur à flux transversal 10, celui-ci fonctionnait dans de bonnes conditions aérauliques.

En particulier :
- (a) doit être au moins égal à 0.8 fois, et préférentiellement une fois, le diamètre D du rotor ;
- (b) doit être au moins égal à 1.5*D, et préférentiellement 2*D ;
- (c) doit être au moins égal à 0,5*D.

Avec ces conditions réunies, la zone d'admission 40 forme un volume tampon et une zone de stabilisation pour permettre une bonne aspiration du ventilateur à flux transversal 10.

En aval du ventilateur à flux transversal 10, il est également important de ne pas créer d'obstacles au flux d'air, et en particulier, il est avantageux de placer les moyens de chauffage 30 à une distance (d) minimale du rotor du ventilateur à flux transversal 10. En particulier, d doit être au moins égal à 0.3*D et préférentiellement 0,5*D.

La structure de l'appareil de cuisson est compacte car les moyens de ventilation sont agencés à côté du panier de cuisson 20, et au dessus de la zone d'admission 40. L'appareil, tout en comprenant un ventilateur à flux transversal 10, est donc compact et très silencieux, mais présente tout de même de bonnes capacités de convection avec un bon fonctionnement du ventilateur à flux transversal 10 garanti par la zone d'admission 40.

De plus, comme représenté figure 2, l'invention propose d'utiliser un fil chauffant 31 enroulé sur un support plat 32, comme un mica par exemple. Le fil chauffant 31 est enroulé autour du support plat 32 en une succession de spires, mais ces dernières sont toutes espacées d'au moins une fois, et préférentiellement 1.5 fois, le diamètre du fil chauffant 31, afin de permettre une bonne ventilation du fil chauffant 31. Ceci procure un transfert efficace de chaleur, et également évite de former des points rouges sur le fil chauffant 31, ce qui pourrait altérer sa longévité. De plus, on remarque que le support plat 32 est ajouré avec de multiples ouvertures (ici cinq), toujours pour permettre une bonne ventilation.

De plus, cet agencement (les spires éloignées les unes des autres) évite de freiner le flux d'air sortant du ventilateur à flux transversal 10, ce qui assure également un fonctionnement silencieux dans de bonnes conditions aérauliques.

On remarque enfin, de retour figure 1, que le support plat 32 des moyens de chauffage est agencé sensiblement parallèle aux veines de flux d'air dans le capot 51 ce qui limite encore les pertes de charges. Enfin, il est avantageux d'orienter les spires avec le fil chauffant aligné avec le flux d'air. En effet, chaque spire comprend deux portions chacune de part et d'autre du support plat 32 qui peuvent être considérées rectilignes, ces deux portions sont alors alignées avec le flux d'air pour limiter la résistance à l'écoulement.

Le panier de cuisson 20, visible figure 1 est amovible par rapport à l'appareil de cuisson, et on peut l'installer / le retirer par un mouvement sensiblement parallèle à l'axe de rotation 12, c'est-à-dire un mouvement perpendiculaire au plan de la figure 1.

Selon une variante de réalisation, afin de réduire les risques d'apparition de point rouge sur le fil chauffant 31 des moyens de chauffage 30, un apport d'air frais est réalisé aux extrémités du ventilateur à flux transversal 10. Cet air frais provenant de l'extérieur de l'appareil entre dans le ventilateur à flux transversal 10 par des ouïes (non représentées) réalisées à proximité des extrémités du ventilateur à flux transversal 10.

Un tel appareil de cuisson peut servir à cuire rapidement des pommes de terre découpées pour faire des frites en les enduisant initialement d'une faible quantité d'huile ou de matière grasse.

On peut également envisager de cuire d'autres aliments, tels que de la viande ou d'autres légumes.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Appareil de cuisson comprenant :
- des moyens de ventilation comprenant un ventilateur à flux transversal (10) agencé pour créer un flux d'air dans un espace de cuisson de l'appareil,
- un panier de cuisson (20), agencé pour recevoir des aliments à cuire dans l'espace de cuisson et pour permettre au flux d'air de traverser un lit d'aliments à cuire,
- des moyens de chauffage (30) agencés pour chauffer le flux d'air,
les moyens de chauffage (30) étant agencés dans le flux d'air en aval des moyens de ventilation, et
le panier de cuisson (20) étant agencé dans le flux d'air en aval des moyens de chauffage (30),
**caractérisé en ce que** l'appareil de cuisson comprend une zone d'admission (40) en amont des moyens de ventilation, agencée entre l'espace de cuisson et les moyens de ventilation, et en communication avec les moyens de ventilation par une tuyère d'admission (11).

2. Appareil de cuisson selon la revendication précédente, dans lequel les moyens de chauffage (30) sont des moyens de chauffage (30) à effet joule.

3. Appareil de cuisson selon la revendication précédente, dans lequel les moyens de chauffage (30) comprennent un fil chauffant (31) d'un diamètre prédéterminé enroulé autour d'un support plat tel qu'un mica sur une pluralité de tours, et dans lequel le fil d'un tour est espacé du fil du tour adjacent d'une distance d'au moins 1.5 fois le diamètre du fil.

4. Appareil de cuisson selon la revendication précédente, dans lequel le support plat des moyens de chauffage (30) est agencé de manière sensiblement parallèle à une direction d'écoulement du flux d'air au niveau des moyens de chauffage (30), et/ou dans lequel chaque tour de fil chauffant (31) présente deux portions sensiblement rectilignes alignées avec ladite direction d'écoulement du flux d'air.

5. Appareil de cuisson selon la revendication 1, dans lequel les moyens de ventilation sont agencés sur un côté du panier de cuisson (20), et/ou dans lequel les moyens de ventilation sont agencés au dessus de la zone d'admission (40).

6. Appareil de cuisson selon l'une des revendications 1 à 5, dans lequel le ventilateur à flux transversal (10) comprend un rotor agencé pour tourner autour d'un axe de rotation (12), et dans lequel la zone d'admission (40) présente un espace libre dont une section dans un plan perpendiculaire à l'axe de rotation (12) présente :
- une largeur (b) supérieure ou égale à au moins 1.5 fois un diamètre (D) du rotor, et/ou
- une hauteur (a) supérieure ou égale à au moins 0.8 fois un diamètre (D) du rotor, et/ou
- une paroi externe agencée à l'opposé de l'espace de cuisson par rapport à l'axe de rotation (12), et agencée à une distance (c) de l'axe de rotation (12) d'au moins 0.5 fois le diamètre (D) du rotor.

7. Appareil de cuisson selon l'une des revendications précédentes, comprenant une zone d'échappement en aval des moyens de ventilation, agencée entre l'espace de cuisson et les moyens de ventilation, et dans lequel les moyens de chauffage (30) sont agencés dans la zone d'échappement, à une distance (d) d'au moins 0.3 fois un diamètre (D) d'un rotor des moyens de ventilation.

8. Appareil de cuisson selon l'une des revendications précédentes, dans lequel les moyens de chauffage (30) sont au moins partiellement en regard des aliments à cuire reçus par le panier de cuisson (20).

9. Appareil de cuisson selon l'une des revendications précédentes, dans lequel le panier de cuisson (20) présente un fond en forme de grille.

10. Appareil de cuisson selon l'une des revendications précédentes, dans lequel le panier de cuisson (20) est agencé de manière amovible par rapport à l'espace de cuisson, et dans lequel le panier de cuisson (20) est agencé pour être monté sur l'appareil par un côté de celui-ci.

## Patentansprüche

1. Gargerät, das Folgendes umfasst:
- Belüftungsmittel, die einen Querstromventilator (10) umfassen, der so angeordnet ist, dass in einem Garraum des Geräts ein Luftstrom erzeugt wird,
- einen Garkorb (20), der so angeordnet ist, dass er Lebensmittel aufnimmt, die im Garraum gegart werden sollen, und dass der Luftstrom durch eine Lage aus zu garenden Lebensmitteln strömen kann,
- Heizmittel (30), die so angeordnet sind, dass sie den Luftstrom erwärmen, wobei die Heizmittel (30) in dem Luftstrom stromabwärts von den Belüftungsmitteln angeordnet sind, und der Garkorb (20) in dem Luftstrom stromabwärts von den Heizmitteln (30) angeordnet ist,
**dadurch gekennzeichnet, dass** das Gargerät einen Einlassbereich (40) stromaufwärts von den Belüftungsmitteln umfasst, der zwischen dem Garraum und den Belüftungsmitteln angeordnet ist und über eine Einlassdüse (11) mit den Belüftungsmitteln in Verbindung steht.

2. Gargerät nach dem vorstehenden Anspruch, worin die Heizmittel (30) Heizmittel (30) nach dem Prinzip der Jouleschen Wärme sind.

3. Gargerät nach dem vorstehenden Anspruch, worin die Heizmittel (30) einen Heizdraht (31) mit einem vorbestimmten Durchmesser umfassen, der um einen flachen Träger, wie ein Glimmer, in einer Vielzahl von Windungen gewickelt ist, und worin der Draht einer Windung von dem Draht der benachbarten Windung um einen Abstand von zumindest dem 1,5-fachen Durchmesser des Drahtes beabstandet ist.

4. Gargerät nach dem vorstehenden Anspruch, worin der flache Träger der Heizmittel (30) im Wesentlichen parallel zu einer Strömungsrichtung des Luftstroms an den Heizmitteln (30) angeordnet ist und/oder worin jede Windung des Heizdrahtes (31) zwei im Wesentlichen gerade Abschnitte aufweist, die mit besagter Strömungsrichtung des Luftstroms ausgerichtet sind.

5. Gargerät nach Anspruch 1, worin die Belüftungsmittel auf einer Seite des Garkorbes (20) angeordnet sind und/oder worin die Belüftungsmittel oberhalb des Einlassbereiches (40) angeordnet sind.

6. Gargerät nach einem der Ansprüche 1 bis 5, worin der Querstromventilator (10) einen Rotor umfasst, der um eine Drehachse (12) drehbar angeordnet ist, und worin der Einlassbereich (40) einen Freiraum aufweist, von dem ein Querschnitt in einer zur Drehachse (12) senkrechten Ebene Folgendes aufweist:
- eine Breite (b) größer oder gleich zumindest dem 1,5-fachen Durchmesser (D) des Rotors, und/oder
- eine Höhe (a) größer oder gleich zumindest dem 0,8-fachen Durchmesser (D) des Rotors, und/oder
- eine Außenwand, die dem Garraum in Bezug auf die Drehachse (12) gegenüberliegend angeordnet ist und in einem Abstand (c) von der Drehachse (12) von zumindest dem 0,5-fachen Durchmesser (D) des Rotors angeordnet ist.

7. Gargerät nach einem der vorstehenden Ansprüche, das einen zwischen dem Garraum und den Lüftungsmitteln angeordneten Auslassbereich stromabwärts von den Lüftungsmitteln umfasst und worin die Heizmittel (30) in dem Auslassbereich in einem Abstand (d) von zumindest dem 0,3-fachen Durchmesser (D) eines Rotors der Lüftungsmittel angeordnet sind.

8. Gargerät nach einem der vorstehenden Ansprüche, worin die Heizmittel (30) den von dem Garkorb (20) aufgenommenen zu garenden Lebensmitteln zumindest teilweise gegenüberliegen.

9. Gargerät nach einem der vorstehenden Ansprüche, worin der Garkorb (20) einen gitterförmigen Boden aufweist.

10. Gargerät nach einem der vorstehenden Ansprüche, worin der Garkorb (20) abnehmbar in Bezug auf den Garraum angeordnet ist und worin der Garkorb (20) so angeordnet ist, dass er an dem Gerät von einer Seite des Geräts aus angebracht werden kann.

## Claims

1. Cooking appliance comprising:
- ventilation means comprising a transverse flow ventilator (10) arranged to create an air flow in a cooking space of the appliance,
- a cooking basket (20), arranged to receive food to be cooked in the cooking space and to allow the air flow to pass through a bed of food to be cooked,
- heating means (30) arranged to heat the air flow, the heating means (30) being arranged in the air flow downstream from the ventilation means, and the cooking basket (20) being arranged in the air flow downstream from the heating means (30),
**characterised in that** the cooking appliance comprises an intake zone (40) upstream from the ventilation means, arranged between the cooking space and the ventilation means, and in communication with the ventilation means through an intake nozzle (11).

2. Cooking appliance according to the preceding claim, wherein the heating means (30) are Joule effect heating means (30).

3. Cooking appliance according to the preceding claim, wherein the heating means (30) comprise a heating wire (31) of a predetermined diameter wound around a flat support such as a mica over a plurality of towers, and wherein the wire of a tower is spaced from the wire of the adjacent tower by a distance of at least 1.5 times the diameter of the wire.

4. Cooking appliance according to the preceding claim, wherein the flat support of the heating means (30) is arranged substantially parallel to a direction of flow of the air flow at the level of the heating means (30), and/or wherein each heating wire tower (31) has two substantially rectilinear portions aligned with said direction of flow of the air flow.

5. Cooking appliance according to claim 1, wherein the ventilation means are arranged on one side of the cooking basket (20), and/or wherein the ventilation means are arranged above the intake zone (40).

6. Cooking appliance according to one of claims 1 to 5, wherein the transverse flow ventilator (10) comprises a rotor arranged to rotate around a rotation axis (12), and wherein the intake zone (40) has a free space, a cross-section of which in a plane perpendicular to the rotation axis (12) has:
- a width (b) greater than or equal to at least 1.5 times the diameter (D) of the rotor, and/or
- a height (a) greater than or equal to at least 0.8 times the diameter (D) of the rotor, and/or
- an outer wall arranged opposite the cooking space with respect to the rotation axis (12), and arranged at a distance (c) from the rotation axis (12) of at least 0.5 times the diameter (D) of the rotor.

7. Cooking appliance according to one of the preceding claims, comprising an exhaust zone downstream from the ventilation means, arranged between the cooking space and the ventilation means, and wherein the heating means (30) are arranged in the exhaust zone, at a distance (d) of at least 0.3 times the diameter (D) of a rotor of the ventilation means.

8. Cooking appliance according to one of the preceding claims, wherein the heating means (30) are at least partially facing the food to be cooked received by the cooking basket (20).

9. Cooking appliance according to one of the preceding claims, wherein the cooking basket (20) has a grille-shaped bottom.

10. Cooking appliance according to one of the preceding claims, wherein the cooking basket (20) is arranged to be removable with respect to the cooking space, and wherein the cooking basket (20) is arranged to be mounted on the appliance by one side of it.
